# EUROPÄISCHE PATENTSCHRIFT

(11) **EP 0 743 480 B1**
(45) Veröffentlichungstag und Bekanntmachung des Hinweises auf die Patenterteilung: **08.03.2000**
(21) Anmeldenummer: 96100096.5
(22) Anmeldetag: 05.01.1996
(51) Int. Cl.: F16L 3/12, F16L 3/137

(54) **Schelle mit Halte- und Stützband**
Clamp having holding- and supporting band
Collier de serrage avec bande de contention et de support

(30) Priorität: 18.05.1995 DE 19518309
(43) Veröffentlichungstag der Anmeldung: 20.11.1996
(73) Patentinhaber: HYDAC Befestigungstechnik GmbH, 66125 Saarbrücken-Dudweiler (DE)
(72) Erfinder: Kasubke, Volker, D-66540 Neunkirchen (DE)
(74) Vertreter: Patentanwälte Bartels und Partner

(56) Entgegenhaltungen:
- EP-A- 0 508 050
- US-A- 2 277 738
- US-A- 3 632 069

## Beschreibung

Die Erfindung betrifft eine Schelle mit einem biegsamen Halteband, an dem ein verschwenkbares Verschlußteil angeordnet ist, mit einem Halteteil, das für den Durchgriff des Haltebandes mit zwei Ausnehmungen versehen ist, die jeweils im Bereich einer Umlenkstelle angeordnet sind, an der das Halteteil endseitig in jeweils ein Fußteil übergeht, und mit einem Stützband, das zumindest teilweise am Halteband anliegt und dem Inneren der Schelle zugewandt ist.

Bei einer gattungsgleichen Schelle nach der EP 0 508 050 A3 sind in dem Halteteil zwei Ausnehmungen für den Eingriff des Haltebandes vorhanden, die im wesentlichen rechteckförmig ausgebildet sind und die nach einer gemeinsamen Seite des Halteteiles ins Freie münden, so daß sich bei bereits festgelegtem Halteteil das Halteband durch seitliches Einführen in die beiden Ausnehmungen auch noch nachträglich am Halteteil sicher festlegen läßt. Die beiden Ausnehmungen sind jeweils im Bereich einer Umlenkstelle angeordnet, an der das Halteteil endseitig in jeweils ein Fußteil übergeht zum Festlegen der Schelle an Gebäuden und feststehenden Maschinenteilen. Mittels des verschwenkbaren Verschlußteiles läßt sich die Schellenöffnung für die Aufnahme eines Rohres od.dgl. weit öffnen und zum Festlegen sicher verschließen. Aufgrund der Elastizität des Haltebandes, das sich in den beiden Ausnehmungen festklemmt, läßt sich bei der bekannten Schelle das Halteband in den Ausnehmungen nur schwer längsverfahren, was die Anpassungsmöglichkeit der bekannten Schelle an vorgegebene Einbauverhältnisse erschwert. Das längs des Haltebandes angeordnete und fest mit ihm verbundene Stützband, das im Bereich des Halteteiles in zwei Hälften geteilt ist, dient der Isolierung des jeweils aufzunehmenden Körpers.

Durch die US-PS 3,632,069 ist es zwar vorbekannt, zum dauerhaften Festlegen von rohrförmigen Körpern und Längsverfahren des Haltebandes dieses in tunnelförmige geschlossene Ausnehmungen des Halteteiles einzusetzen; allein das Halteteil weist einen wannenförmigen Aufnahmeteil mit geradlinig verlaufendem Boden und zwei hochstehenden Flanken auf, die die Aufnahmemöglichkeit in dieser bekannten Schelle für verschiedenste Arten von aufzunehmenden, rohrförmigen Körpern einschränken. Darüber hinaus verbleibt bei einem Längsverfahren des Haltebandes in den geschlossenen Ausnehmungen des Halteteiles das Halteband nicht in dieser verschobenen Position, was die Montagefreundlichkeit dieser bekannten Schelle herabsetzt, wenn bedingt durch Einbauverhältnisse das Verschlußteil verschiedene Positionen längs des Außenumfanges der Schelle einnehmen soll.

Ausgehend von diesem Stand der Technik liegt der Erfindung die Aufgabe zugrunde, eine Schelle zu schaffen, die derart anpaßbar ist, daß sich mit ihr eine Vielzahl von verschiedenartigen, insbesondere rohrförmigen Körpern auch an Stellen mit beengtem Einbauraum aufnehmen läßt und die montagefreundlich ist. Eine dahingehende Aufgabe löst eine Schelle mit den Merkmalen des Anspruches 1.

Dadurch, daß gemäß dem kennzeichnenden Teil des Anspruches 1 die Ausnehmungen von dem Halteteil vollständig umschlossen sind, daß das Halteteil mittig zwischen seinen beiden Fußteilen eine bogenförmige Anlagestelle oder eine Knickstelle aufweist, an der das Halteband anliegt, die jeweils zwischen dem Halteband und dem Stützband angeordnet ist, das nach dem Austritt des Haltebandes aus den Ausnehmungen mit diesem in Anlage ist und daß das Stützband im Bereich seiner freien Enden mit dem Halteband verbunden ist, ist das biegsame Halteband längsverfahrbar innerhalb des Halteteiles derart gehalten, daß das Verschlußteil sich in Längsrichtung beliebig längs des Schellenbogens verfahren läßt, um so die Einsatzmöglichkeiten der Schelle auch bei beengten Einbauverhältnissen vollständig zu gewährleisten. Hierbei kommt es, auch begünstigt durch die Anordnung der bogenförmigen Anlagestelle oder der Knickstelle zwischen Stütz- und Halteband, zu einer Selbsthemmung, so daß in jeder einnehmbaren Verfahrstellung das Schellenband von selbst seine eingenommene Position beibehält, was die Anpassungsmöglichkeiten der bekannten Schelle an vorgegebene erschwerte Einbauverhältnisse ermöglicht und insgesamt die Montagefreundlichkeit mit der erfindungsgemäßen Schelle erhöht. Das zumindest teilweise aufgrund von Eigenspannung kraftschlüssig am Halteband und Halteteil anliegende einstückige Stützband, das darüber hinaus im Bereich seiner freien Enden mit dem Halteband verbunden ist, dient auch zur Rundumisolierung eines aufzunehmenden Körpers. Die bogenförmige Anlagestelle oder die angesprochene Knickstelle innerhalb des Halteteiles bewirkt darüber hinaus, daß sich verschiedenartigste, rohrförmige Körper in einem vorgebbaren Durchmesserbereich innerhalb des Aufnahmeraumes der Schelle noch sicher festlegen lassen.

Bei einer bevorzugten Ausführungsform der erfindungsgemäßen Schelle verläuft in einem senkrecht verlaufenden Stegteil des jeweiligen Fußteiles teilweise die jeweilige rechteckförmige Ausnehmung und die sonstige zugehörige Ausnehmung ist in einem bogenförmig oder geradlinig verlaufenden Auflagestück zwischen der Anlagestelle bzw. der Knickstelle und der bogenförmigen Umlenkstelle angeordnet. Aufgrund dieser Anordnung läßt sich besonders einfach und mit geringen Betätigungskräften die gewünschte Längsverfahrbarkeit und Selbsthemmung des biegsamen Haltebandes innerhalb der Schelle erreichen.

Bei einer weiteren bevorzugten Ausführungsform der erfindungsgemäßen Schelle weist die Knickstelle eine Abrundung auf und geht in Richtung der beiden Fußteile jeweils in ein Auflagestück über, das eine Anlagefläche in diesem Bereich für das Stützband bildet. Durch die hierdurch entstehenden relativ großen Anlageflächen der Auflagestücke lassen sich jeweils hohe Haltekräfte auf das in der Schelle aufzunehmende Bauteil erreichen.

Bei einer weiteren bevorzugten Ausführungsform der erfindungsgemäßen Schelle ist mindestens ein Verbindungsteil der Schelle als Schnappteil bügelartig ausgebildet und umfaßt ins Innere der Schelle ragend das Halteteil randseitig. Ferner ist vorzugsweise das Stützband zwischen dem Verbindungsteil und dem Halteband angeordnet. Mittels des jeweiligen Verbindungsteiles läßt sich dann innerhalb des Schellenraumes eine verbesserte Durchmesseranpassung für den jeweils in der Schelle aufzunehmenden Körper erreichen. Vorzugsweise kann es dabei zusätzlich vorgesehen sein, im jeweiligen Verbindungsteil mindestens eine der Form des Stützbandes angepaßte Ausnehmung vorzusehen, die die Längsverfahrbarkeit des Stützbandes in Verbindung mit dem Halteband in diesem Bereich gewährleistet.

Im folgenden wird die erfindungsgemäße Schelle anhand der Zeichnung näher erläutert.

Es zeigen:
- Fig.1: eine Seitenansicht auf die Schelle mit Halteband und Halteteil;
- Fig.2: eine Draufsicht auf das Halteteil nach der Fig.1;
- Fig.3: ein als Schnappteil ausgebildetes Verbindungsteil für die Schelle nach der Fig.1.

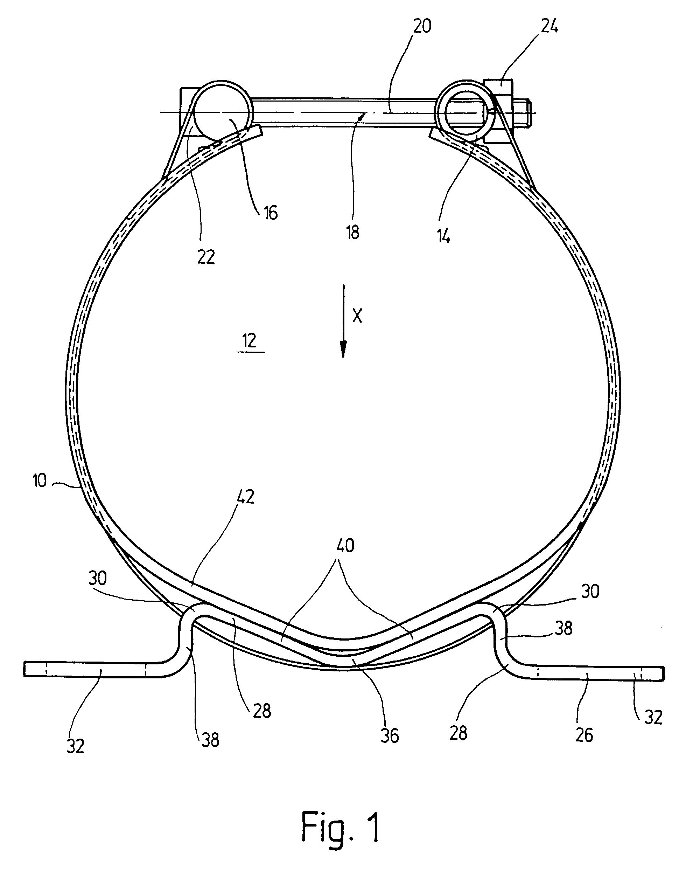

Die Schelle nach der Fig.1 weist als Schellenband ein biegsames Halteband 10 auf, das im wesentlichen kreisförmig ausgebildet ist und einen Aufnahmeraum 12 begrenzt, in dem ein rohrförmiger Körper (nicht dargestellt) in seiner Lage festlegbar ist. Das Halteband 10 ist an seinen freien Enden umgebogen und umschließt jeweils einen Zapfen 14 und 16, die Bestandteil eines als Ganzes mit 18 bezeichneten Verschlußteiles sind. Zum Verschwenken des Verschlußteiles 18 ist dieses mit einem Schraubenbolzen 20 versehen, der an seinem einen Ende ein Gewinde und an seinem anderen Ende einen Schraubenkopf 22 aufweist, der mit einer Innen-Sechskantausnehmung versehen ist.

Auf das Gewinde des Schraubenbolzens 20 ist eine Gewindemutter 24 aufschraubbar, die eine Längsverstellung des Schraubenbolzens 20 ermöglicht. Im Bereich der beiden Zapfen 14 und 16 ist das Halteband 10 längsgeteilt und der Zapfen 16 weist eine ovale, nach oben hin offene Ausnehmung (nicht dargestellt) auf, die zum Herstellen des Schnellverschlusses den Eingriff des Schraubenbolzens 20 von oben her erlaubt. Zum Ein- und Ausschwenken des Schraubenbolzens 20 ist der weitere Zapfen 14 verdrehbar innerhalb des umgebogenen Haltebandendes gehalten.

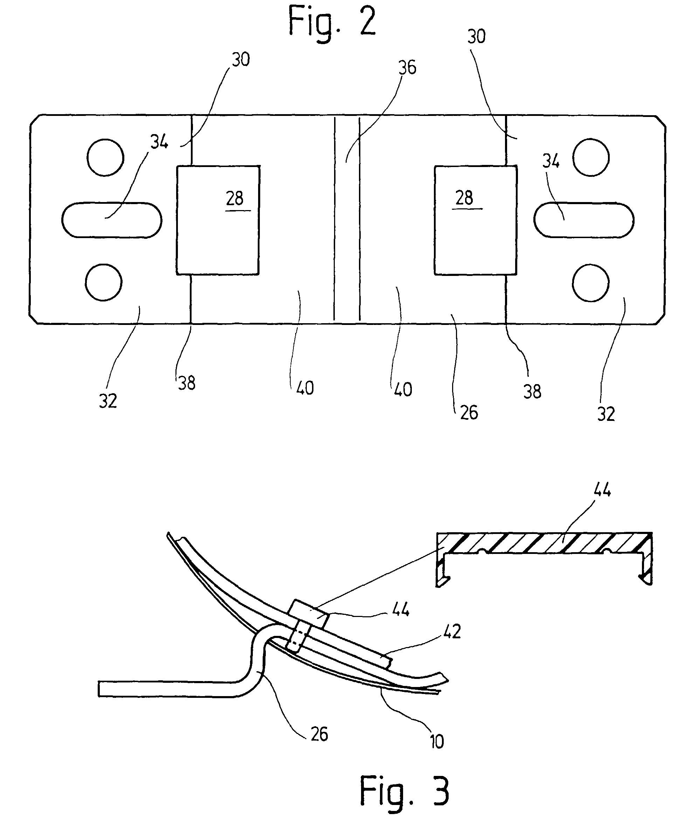

Die Schelle weist darüber hinaus ein Halteteil 26 auf, das für den Durchgriff des Haltebandes 10 mit zwei Ausnehmungen 28 versehen ist, die jeweils im Bereich einer Umlenkstelle 30 angeordnet sind, an der das Halteteil 26 endseitig in jeweils ein Fußteil 32 übergeht. Die beiden Fußteile 32 können zum Festlegen des Halteteiles 26 auf einem festen Untergrund mit Längsbohrungen 34 od.dgl. versehen sein. Wie sich insbesondere aus der Fig.2 ergibt, sind die beiden Ausnehmungen 28, die im wesentlichen rechteckförmig ausgebildet sind, von dem Halteteil 26 randseitig vollständig umschlossen, wobei das Halteteil 26 mittig in Richtung der beiden Fußteile 32 eine gerundete Knickstelle 36, die auch an einen anders geformten, aufzunehmenden Körper angepaßt werden kann, aufweist. Anstelle der Knickstelle 36 kann jedoch auch ein teilzylindrischer Anlagebogen (nicht dargestellt) vorgesehen sein.

Die angesprochene jeweilige Ausnehmung 28 verläuft teilweise in dem senkrecht verlaufenden Stegteil 38 des jeweils zugeordneten Fußteiles 32 sowie in einem geradlinig verlaufenden Auflagestück 40 zwischen der Knickstelle 36 und der bogenförmigen Umlenkstelle 30. Das Halteband 10 selbst ist den beiden Fußteilen 32 zugewandt mit der Knickstelle 36 in Anlage, wie dies insbesondere die Fig.1 zeigt, und die Knickstelle 36 ist zwischen dem Halteband 10 und einem Stützband 42 aus gummielastischem Material angeordnet, wobei nach dem Austritt des Haltebandes 10 aus den beiden Ausnehmungen 28 dieses mit dem Stützband 42 in Anlage ist. Das Stützband 42 kann etwas breiter ausgebildet sein als das Halteband 10 und zumindest endseitig ist das Stützband 42 über entsprechende Ausschnitte in dem elastischen Bandmaterial an dem Halteband 10 festgeklemmt und mithin fixiert. Dank dieses Aufbaues kann das Halteband 10 zusammen mit dem Stützband 42 in beiden Richtungen innerhalb der Ausnehmungen 28 frei längsverfahren werden, wobei in jeder Verfahrstellung die beiden Bänder 10 und 42 aufgrund ihrer Elastizität und der Vorspannung zwischen Halteband und Stützband 42 von selbst ihre Position beibehalten. Das Verschlußteil 18 läßt sich dabei in jeder der angenommenen Positionen öffnen und schließen.

Wie die Fig.3 zeigt, kann darüber hinaus mindestens ein als Schnappteil ausgebildetes Verbindungsteil 44 vorgesehen sein, das im Bereich des Halteteiles 26 zumindest das Stützband 42 schnappend umfaßt und dabei ins Innere 12 der Schelle ragend am Halteteil 26 festgelegt ist. Derart läßt sich eine weitere Durchmesser- oder Höhenanpassung innerhalb des Schellenraumes 12 erreichen, ohne daß dabei die Längsverfahrbarkeit des Halte- und Stützbandes unterbrochen oder beeinträchtigt wird. Das Verbindungsteil 44 kann dabei, wie dies insbesondere die Fig.3 zeigt, mit Längskanälen versehen sein, die der Aufnahme des Stützbandes 42 dienen und die die Längsverfahrbarkeit von Halteband 10 und Stützband 42 gewährleisten, auch wenn das Verbindungsteil 44 an dem Fußteil 26 festgelegt ist.

## Patentansprüche

1. Schelle mit einem biegsamen Halteband (10), an dem ein verschwenkbares Verschlußteil (18) angeordnet ist, mit einem Halteteil (26), das für den Durchgriff des Haltebandes (10) mit zwei Ausnehmungen (28) versehen ist, die jeweils im Bereich einer Umlenkstelle (30) angeordnet sind, an der das Halteteil (26) endseitig in jeweils ein Fußteil (32) übergeht, und mit einem Stützband (42), das zumindest teilweise am Halteband (10) anliegt und dem Inneren der Schelle zugewandt ist, dadurch gekennzeichnet, daß die Ausnehmungen (28) von dem Halteteil (26) vollständig umschlossen sind, daß das Halteteil (26) mittig zwischen seinen beiden Fußteilen (32) eine bogenförmige Anlagestelle oder eine Knickstelle (36) aufweist, an der das Halteband (10) anliegt, die jeweils zwischen dem Halteband (10) und dem Stützband (42) angeordnet ist, das nach dem Austritt des Haltebandes (10) aus den Ausnehmungen (28) mit diesem in Anlage ist und daß das Stützband (42) im Bereich seiner freien Enden mit dem Halteband (10) verbunden ist.

2. Schelle nach Anspruch 1, dadurch gekennzeichnet, daß in einem senkrecht verlaufenden Stegteil (38) des jeweiligen Fußteiles (32) die jeweilige rechteckförmige Ausnehmung (28) teilweise verläuft und die sonstige zugehörige Ausnehmung (28) in einem bogenförmig oder geradlinig verlaufenden Auflagestück (40) zwischen der Anlagestelle bzw. der Knickstelle (36) und der bogenförmigen Umlenkstelle (30) angeordnet ist.

3. Schelle nach Anspruch 1 oder 2, dadurch gekennzeichnet, daß die Knickstelle (36) eine Abrundung aufweist und in Richtung der beiden Fußteile (32) jeweils in ein Auflagestück (40) übergeht, das eine Anlagefläche in diesem Bereich für das Stützband (42) bildet.

4. Schelle nach einem der Ansprüche 1 bis 3, dadurch gekennzeichnet, daß mindestens ein Verbindungsteil (44) als Schnappteil ausgebildet bügelartig ins Innere (12) der Schelle ragend das Halteteil (26) randseitig umfaßt und daß zwischen dem Halteteil (26) und dem Verbindungsteil (44) das Stützband (42) angeordnet ist.

## Claims

1. Clamp having a flexible holding band (10), on which a tiltable closure part (18) is located, having a holding part (26), which for the passage of the holding band (10) is provided with two recesses (28), which are respectively located in the region of a deflection point (30), at which the holding part (26) passes on the end side into respectively one foot part (32), and having a support band (42), which bears at least partially against the holding band (10) and faces the inside of the clamp, characterised in that the recesses (28) are completely enclosed by the holding part (26), that centrally between its two feet part (32) the holding part (26) comprises a curved abutment point or kink (36), against which the holding band (10) bears, which abutment point or kink (36) is located respectively between the holding band (10) and the support band (42), which after the emergence of the holding band (10) from the recesses (28) is in abutment with the latter and that in the region of its free ends the support band (42) is connected to the holding band (10).

2. Clamp according to Claim 1, characterised in that the respective rectangular recess (28) extends partly in a vertically extending web part (38) of the respective foot part (32) and the other associated recess (28) is located in a bearing member (40) extending in a curved or straight manner between the abutment point or the kink (36) and the curved deflection point (30).

3. Clamp according to Claim 1 or 2, characterised in that the kink (36) has a rounded portion and in the direction of the two foot parts (32) passes respectively into a bearing member (40), which forms an abutment surface in this region for the support band (42).

4. Clamp according to one of Claims 1 to 3, characterised in that at least one connecting part (44), constructed as a snap-action part, projecting in the form of a clip into the inside (12) of the clamp, encloses the holding part (26) on the edge side and that the support band (42) is located between the holding part (26) and the connecting part (44).

## Revendications

1. Bride de fixation formée par un collier de support (10) flexible, contre lequel est monté un élément de fermeture (18) pivotant, par une pièce de blocage (26) qui est munie de deux évidements (28) à travers lesquels passe le collier de support (10) et qui sont réalisés chacun dans la zone d'une surface de déviation (30), au niveau de laquelle la pièce de blocage (26) se prolonge à une extrémité pour former un pied (32), et par un collier d'appui (42), qui est au moins en partie en contact avec le collier de support (10) et qui est disposé vers l'intérieur de la bride de fixation, caractérisée en ce que les évidements (28) sont entièrement entourés par la pièce de blocage (26), en ce que la pièce de blocage (26) comporte en son centre, entre les deux pieds (32), une zone de retenue courbe ou une zone infléchie (36), contre laquelle le collier de support (10) entre en contact et qui est disposée respectivement entre le collier de support (10) et le collier d'appui (42), qui entre en contact avec le collier de support (10) après que celui-ci soit ressorti des évidements (28) et en ce que le collier d'appui (42) est assemblé avec le collier de support (10) dans la zone de ses extrémités libres.

2. Bride de fixation selon la revendication 1, caractérisée en ce que chaque évidement (28) rectangulaire s'étend en partie dans une barrette (38) orientée perpendiculairement avec chaque pied (32), et le reste de l'évidement (28) est réalisé dans une zone de contact (40) courbe ou rectiligne, située entre la zone de retenue courbe ou zone infléchie (36) et la surface de déviation courbe (30).

3. Bride de fixation selon la revendication 1 ou 2, caractérisée en ce que la zone infléchie (36) est arrondie et se prolonge en direction des deux pieds (32) pour former respectivement une zone de contact (40), qui forme une surface de pose pour le collier d'appui (42) dans cette partie.

4. Bride de fixation selon l'une quelconque des revendications 1 à 3, caractérisée en ce qu'au moins une pièce d'assemblage (44) est conçue comme une pièce à encliqueter en forme d'étrier, qui entoure le bord de la pièce de blocage (26) en formant une saillie vers l'intérieur (12) de la bride de fixation, et en ce que le collier d'appui (42) est disposé entre la pièce d'assemblage (44) et le collier de support (10).
